# EUROPÄISCHE PATENTSCHRIFT

(11) **EP 3 268 253 B1**
(45) Veröffentlichungstag und Bekanntmachung des Hinweises auf die Patenterteilung: **10.04.2019**
(21) Anmeldenummer: 16704797.6
(22) Anmeldetag: 11.02.2016
(51) Int. Cl.: B60T 8/48, B60T 8/36, B60T 13/14

(54) **HYDRAULISCHE BREMSANLAGE**
HYDRAULIC BRAKING SYSTEM
SYSTÈME DE FREINAGE HYDRAULIQUE

(30) Priorität: 10.03.2015 DE 102015003201
(43) Veröffentlichungstag der Anmeldung: 17.01.2018
(73) Patentinhaber: WABCO GmbH, 30453 Hannover (DE)
(72) Erfinder: BRÜTT, Mirko, 30952 Ronnenberg (DE); HEINRICH, Volker, 31171 Nordstemmen (DE); ZIELKE, Frank, 30890 Barsinghausen (DE)
(74) Vertreter: Krause, Martin
(86) Internationale Anmeldenummer: PCT/EP2016/000230
(87) Internationale Veröffentlichungsnummer: WO 2016/142028

(56) Entgegenhaltungen:
- EP-B1- 1 013 528
- WO-A1-2004/020264
- WO-A1-2009/138075
- DE-A1- 19 546 056

## Beschreibung

Die Erfindung betrifft eine fremdkraftgestützte hydraulische Bremsanlage eines Radfahrzeugs, mit zwei Bremskreisen, die jeweils eine über ein Bremsventil mit einer druckführenden Vorlaufleitung oder mit einer drucklosen Rücklaufleitung verbindbare Hauptbremsleitung sowie mehrere von dieser abzweigende, jeweils zu einem Radbremszylinder einer Radbremse führende Radbremsleitungen aufweisen, mit einer Ventilanordnung einer ABS-Steuerung, die an jeder Radbremse ein in der betreffenden Radbremsleitung angeordnetes Einlassventil mit einem parallel geschalteten Rückschlagventil und ein von dem jeweiligen Radbremszylinder in eine Rücklaufleitung führendes Auslassventil aufweist, und mit einer Ventilanordnung einer ASR-Steuerung, mittels der eine Druckleitung unmittelbar mit den Hauptbremsleitungen verbindbar und die Rücklaufleitungen absperrbar sind.

Während Personenfahrzeuge und leichte Nutzfahrzeuge üblicherweise eine pedalkraftgestützte hydraulische Bremsanlage und schwerere Nutzfahrzeuge eine fremdkraftgestützte pneumatische Bremsanlage aufweisen, können Radfahrzeuge, die, wie zum Beispiel Baumaschinen und Ackerschlepper, für einen Einsatz außerhalb befestigter Straßen und Wege vorgesehen sind, mit einer fremdkraftgestützten hydraulischen Bremsanlage ausgerüstet sein. Aufgrund der erforderlichen hohen Bremskräfte weisen die Radbremszylinder derartiger Radfahrzeuge ein relativ großes Verdrängungsvolumen auf, das nur mit einer fremdkraftgestützten Bremsanlage gefördert werden kann. Da Baumaschinen und Ackerschlepper üblicherweise über hydraulische Arbeitsgeräte verfügen oder sogar einen hydrostatischen Antrieb aufweisen, kann eine fremdkraftgestützte hydraulische Bremsanlage vorteilhaft die ohnehin vorhandene hydraulische Druckversorgungseinrichtung nutzen.

Vorliegend wird von einer fremdkraftgestützten hydraulischen Bremsanlage eines Radfahrzeugs ausgegangen, die zwei Bremskreise, eine Ventilanordnung einer Blockierschutzsteuerung (ABS™-Steuerung), und eine Ventilanordnung einer Antriebsschlupfregelung (ASR™-Steuerung) aufweist. Die Bremskreise weisen jeweils ein durch ein Bremspedal betätigbares Bremsventil auf, mittels denen jeweils eine Hauptbremsleitung, von der mehrere jeweils zu einem Radbremszylinder einer Radbremse führende Radbremsleitungen abzweigen, zur Betätigung der Radbremsen mit einer druckführenden Vorlaufleitung und zum Lösen der Radbremsen mit einer drucklosen Rücklaufleitung verbindbar sind.

Die Ventilanordnung der ABS-Steuerung umfasst mehrere Einlassventile mit jeweils einem parallel geschalteten, in Richtung der betreffenden Hauptbremsleitung öffnenden Rückschlagventil und mehrere Auslassventile. An jeder Radbremse sind in der betreffenden Radbremsleitung ein Einlassventil mit einem Rückschlagventil und ein von dem jeweiligen Radbremszylinder in eine Rücklaufleitung führendes Auslassventil angeordnet. Im unbetätigten Zustand sind die Einlassventile geöffnet und die Auslassventile geschlossen. Wenn während eines Bremsvorgangs durch die Auswertung von an den Fahrzeugrädern angeordneten Drehzahlsensoren ein blockiertes oder ein vor dem Blockieren befindliches Fahrzeugrad festgestellt wird, wird das Einlassventil des zugeordneten Radbremszylinders geschlossen und das entsprechende Auslassventil geöffnet, wodurch die Radbremse des betreffenden Fahrzeugrades gelöst wird. Wenn zum Beispiel nach dem Lösen des Bremspedals in einem der Radbremszylinder ein höherer Druck als in der zugeordneten Hauptbremsleitung vorliegt, wird dieser Druck bei geschlossenen Einlass- und Auslassventilen über das dem Einlassventil parallel geschaltete Rückschlagventil abgebaut.

Die ASR-Steuerung greift ebenfalls auf die Einlass- und Auslassventile der ABS-Steuerung zurück. Wenn beim Anfahren oder Beschleunigen des Radfahrzeugs mittels den an den Fahrzeugrädern angeordneten Drehzahlsensoren ein durchdrehendes Antriebsrad festgestellt wird, wird eine druckführende Druckleitung über die Ventilanordnung der ASR-Steuerung unmittelbar, das heißt unter Umgehung der Bremsventile, mit den Hauptbremsleitungen der beiden Bremskreise verbunden und zugleich die Rücklaufleitungen, die bei unbetätigtem Bremspedal über die Bremsventile mit den Hauptbremsleitungen verbunden sind, abgesperrt. Unmittelbar vorher werden die Einlassventile der Bremszylinder der nicht angetriebenen Fahrzeugräder und der nicht durchdrehenden Antriebsräder geschlossen, so dass nur die Radbremse des durchdrehenden Antriebsrades betätigt wird. Durch das Abbremsen des durchdrehenden Antriebsrades wird das von der dortigen Radbremse aufgenommene Bremsmoment an dem gegenüberliegenden Antriebsrad derselben Antriebsachse über das Achsdifferenzial in gleicher Höhe als Antriebsmoment wirksam, wodurch das Radfahrzeug anfahren beziehungsweise weiter beschleunigen kann. Im Vergleich zu einem in einer Antriebsachse angeordneten Sperrdifferenzial, mit dem ein Traktionsverlust an einem Antriebsrad ebenfalls verhindert werden kann, stellt eine über einen aktiven Bremseingriff wirksame Antriebsschlupfregelung eine relativ einfache und deutlich kostengünstigere Einrichtung dar.

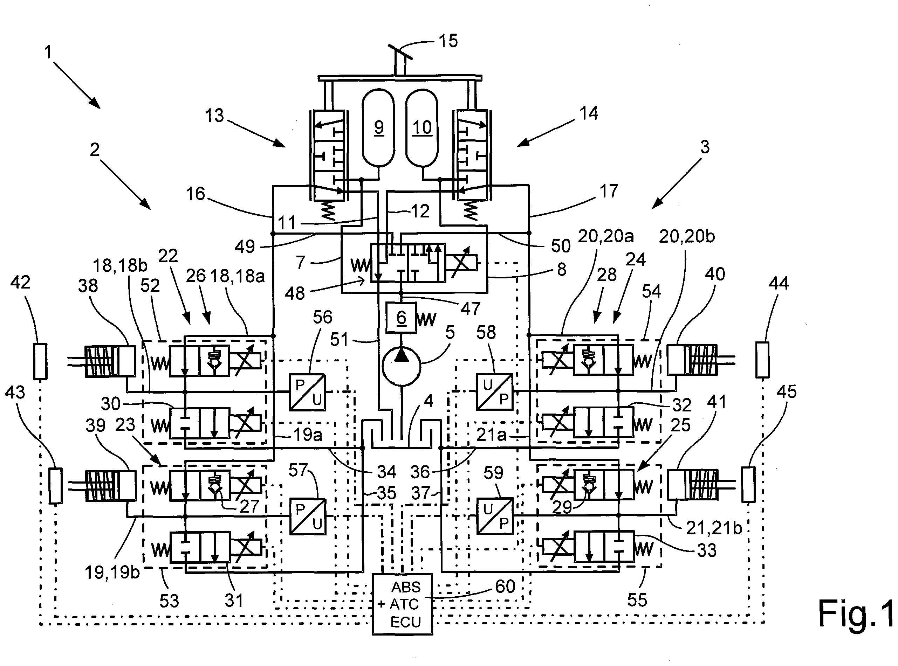

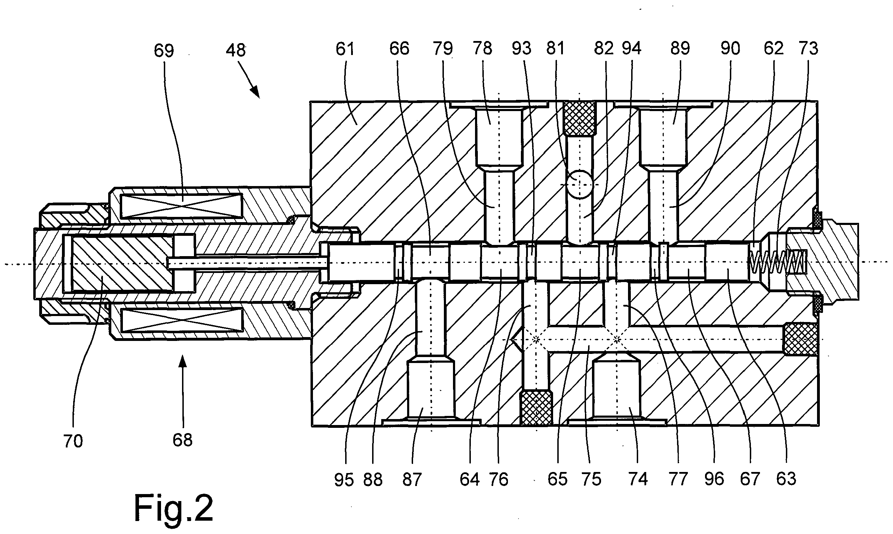

In der DE 195 46 056 A1 ist eine fremdkraftgestützte hydraulische Bremsanlage eines Kraftfahrzeugs mit zwei Bremskreisen, einer ABS-Steuerung und einer ASR-Steuerung beschrieben. Das betreffende Kraftfahrzeug weist beispielhaft eine Antriebsachse und eine nicht angetriebene Fahrzeugachse auf. Die Radbremszylinder der Radbremsen sind diagonal auf die beiden Bremskreise verteilt. Für die ASR-Steuerung ist eine druckführende Druckleitung vorgesehen, die unter Umgehung der vorliegend in einem Dosierventil zusammengefassten Bremsventile von einer Druckquelle mit einer Verzweigung zu den Radbremsleitungen der Antriebsräder führt. In einer ersten Ausführungsform gemäß der dortigen Fig. 1 weist die Ventilanordnung der ASR-Steuerung ein vor der Verzweigung in der Druckleitung angeordnetes, als ein 2/2-Wege-Magnetschaltventil ausgebildetes Sperrventil und zwei jeweils nach der Verzweigung angeordnete Rückschlagventile zur Einspeisung des Druckmittels auf. In einer zweiten Ausführungsform gemäß der dortigen Fig. 2 weist die Ventilanordnung der ASR-Steuerung zwei jeweils nach der Verzweigung in den Druckleitungszweigen angeordnete, jeweils als 2/2-Wege-Magnetschaltventil ausgebildete Sperrventile zur Einspeisung des Druckmittels auf. Zudem weisen beide Ausführungsformen der Ventilanordnung der ASR-Steuerung jeweils in jedem Bremskreis ein zwischen der Abzweigung von der Hauptbremsleitung und der Einmündung des jeweiligen Druckleitungszweiges in der Radbremsleitung angeordnetes, als ein 2/2-Wege-Magnetschaltventil ausgebildetes Trennventil zur Verhinderung eines Abflusses des Druckmittels auf.

Aus der EP 1 013 528 B1 sind verschiedene Ausführungen einer hydraulischen Bremsanlage eines Radfahrzeugs mit zwei Bremskreisen und einer von den Bremsventilen unabhängigen Betätigung von Radbremsen bekannt, bei denen die Betätigungsventile der Ventilanordnung zwischen dem jeweiligen Bremsventil und der Druckversorgungseinrichtung angeordnet sind. Das betreffende Kraftfahrzeug weist beispielhaft zwei Fahrzeugachsen auf. Die Radbremszylinder der Radbremsen sind achsweise auf die beiden Bremskreise verteilt. Durch die Ventilanordnung sind jeweils nur die Radbremsen eines Bremskreises beziehungsweise einer Fahrzeugachse betätigbar. In einer ersten Ausführungsform gemäß der dortigen Fig. 1 umfasst die Ventilanordnung ein einziges, als ein 5/2-Wege-Magnetschaltventil ausgebildetes ASR-Steuerventil auf, über das die Zulaufleitung eines Bremskreises mit einer unmittelbar zu der betreffenden Hauptbremsleitung führenden Bypassleitung verbindbar sowie die Rücklaufleitung desselben Bremskreises absperrbar ist. Dieselbe Funktion wird in einer zweiten Ausführungsform der Ventilanordnung gemäß der dortigen Fig. 2 mit einem als ein 4/2-Wege-Magnetschaltventil ausgebildeten ASR-Steuerventil erfüllt.

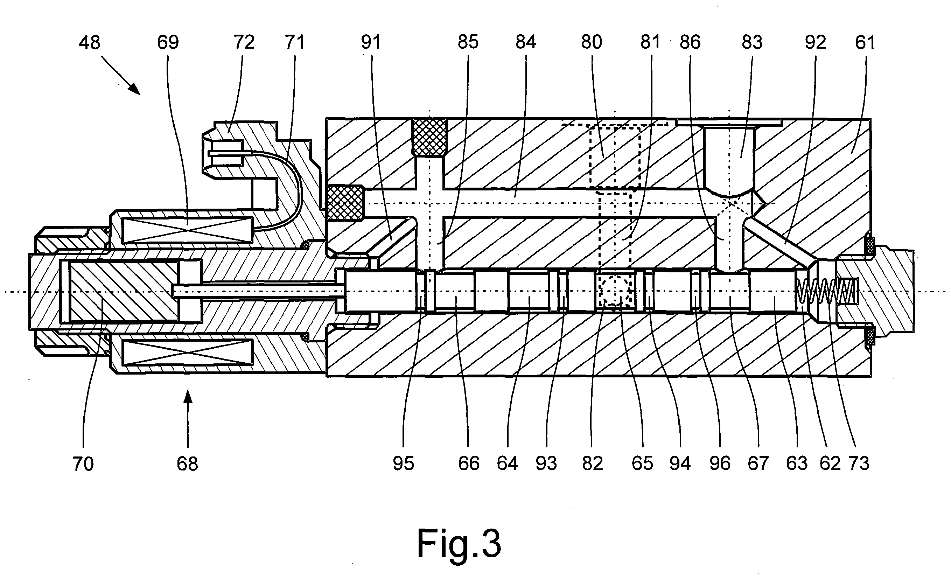

In einer dritten Ausführungsform gemäß der dortigen Fig. 3 umfasst die dort einer ASR-Steuerung zugeordnete Ventilanordnung zwei jeweils als 2/2-Wege-Magnet-schaltventil ausgebildete ASR-Steuerventile. Das eine, im unbetätigten Zustand geschlossene Steuerventil ist in einer Bypassleitung angeordnet, die von der Zulaufleitung eines Bremskreises unmittelbar zu der betreffenden Hauptbremsleitung führt. Das andere, im unbetätigten Zustand geöffnete Steuerventil ist in der Rücklaufleitung desselben Bremskreises angeordnet, die von dem zugeordneten Bremsventil in einen Vorratsbehälter führt. Bei Verwendung dieser bekannten Ventilanordnungen für die ASR-Steuerung eines allradgetriebenen Radfahrzeugs mit zwei Antriebsachsen und zwei Bremskreisen wären demzufolge zwei 5/2-Wege-Magnetschaltventile beziehungsweise zwei 4/2-Wege-Magnetschaltventile oder vier 2/2-Wege-Magnet-schaltventile erforderlich.

Der Erfindung liegt daher die Aufgabe zugrunde, eine hydraulische Bremsanlage der eingangs genannten Art vorzuschlagen, bei welcher die ASR-Steuerung die Rad-bremsen beider Bremskreise einbezieht, und die Ventilanordnung der ASR-Steuerung im Vergleich mit den bekannten Ventilanordnungen in Verbindung mit einer hohen Steuerungsdynamik steuerungstechnisch vereinfacht ist sowie weniger Bauraum in Anspruch nimmt.

Diese Aufgabe ist in Verbindung mit den Merkmalen des Oberbegriffs des Anspruchs 1 dadurch gelöst, dass die Ventilanordnung der ASR-Steuerung ein einziges, als ein 6/2-Wege-Magnetschaltventil ausgebildetes ASR-Steuerventil aufweist, über das im unbetätigten Zustand eine druckführende Hauptdruckleitung gegen zwei jeweils unmittelbar zu einer der Hauptbremsleitungen führenden Bypassleitungen abgesperrt sowie die beiden Rücklaufleitungen mit einer drucklosen Sammelleitung verbunden sind, und über das im betätigten Zustand die Hauptdruckleitung mit den beiden Bypassleitungen verbunden sowie die beiden Rücklaufleitungen gegen die Sammelleitung abgesperrt sind.

Die Erfindung geht demnach aus von einer an sich bekannten fremdkraftgestützten hydraulischen Bremsanlage eines Radfahrzeugs aus, die zwei Bremskreise aufweist, welche jeweils eine über ein Bremsventil mit einer druckführenden Vorlaufleitung oder mit einer drucklosen Rücklaufleitung verbindbare Hauptbremsleitung und mehrere von dieser abzweigende, jeweils zu einem Radbremszylinder einer Radbremse führende Radbremsleitungen aufweisen. Zudem weist die hydraulische Bremsanlage eine Ventilanordnung einer ABS-Steuerung auf, die an jeder Radbremse ein in der betreffenden Radbremsleitung angeordnetes Einlassventil mit einem parallel geschalteten Rückschlagventil und ein von dem jeweiligen Radbremszylinder in eine Rücklaufleitung führendes Auslassventil aufweist. Außerdem ist eine Ventilanordnung einer ASR-Steuerung vorgesehen, mittels der zur Aktivierung einer Antriebsschlupfregelung eine druckführende Druckleitung unmittelbar, also unter Umgehung der Bremsventile, mit den Hauptbremsleitungen verbindbar und die von den Bremsventilen ausgehenden Rücklaufleitungen absperrbar sind.

Erfindungsgemäß wird die Funktion der Ventilanordnung der ASR-Steuerung durch ein einziges, als ein 6/2-Wege-Magnetschaltventil ausgebildetes ASR-Steuerventil erfüllt, über welches im unbetätigten Zustand eine druckführende Hauptdruckleitung gegen zwei jeweils unmittelbar, also unter Umgehung des jeweiligen Bremsventils zu einer der Hauptbremsleitungen führenden Bypassleitungen abgesperrt sowie die von den Bremsventilen ausgehenden Rücklaufleitungen mit einer drucklosen Sammelleitung verbunden sind, und über welches im betätigten Zustand die Hauptdruckleitung mit den zwei Bypassleitungen verbunden sowie die beiden Rücklaufleitungen gegen die Sammelleitung abgesperrt sind.

Zur Aktivierung der Antriebsschlupfregelung müssen somit außer der Betätigung des ASR-Steuerventils nur die Einlassventile der ABS-Steuerung der nicht zu betätigenden Radbremsen geschlossen werden. Durch die Betätigung beziehungsweise die Umschaltung des ASR-Steuerventils werden die Hauptbremsleitungen der beiden Bremskreise zur Einspeisung des Druckmittels mit der Hauptdruckleitung verbunden und die Rücklaufleitungen zur Verhinderung eines Abflusses des Druckmittels über die geöffneten Bremsventile abgesperrt. Eine entsprechende hydraulische Bremsanlage der eingangs genannten Art ohne eine ASR-Steuerung kann somit mit relativ einfachem steuerungstechnischen Aufwand und geringem zusätzlichen Platzbedarf um eine ASR-Steuerung erweitert werden.

Das ASR-Steuerventil der ASR-Steuerung ist bevorzugt als ein Schieberventil mit einem in einer Ventilbohrung eines Ventilgehäuses axialbeweglich geführten Steuerkolben mit vier Steuernuten ausgebildet, bei dem der Anschluss der Hauptdruckleitung innerhalb des Ventilgehäuses in zwei Schaltkanäle verzweigt ist, welche in zwei voneinander beabstandeten Axialpositionen radial in die Ventilbohrung einmünden sowie im betätigten Zustand des ASR-Steuerventils über zwei Steuernuten des Steuerkolbens mit jeweils einem Anschlusskanal der Bypassleitungen verbunden sind, und bei dem der Anschluss der Sammelleitung innerhalb des Ventilgehäuses in zwei Schaltkanäle verzweigt ist, welche in zwei weiteren voneinander beabstandeten Axialpositionen radial in die Ventilbohrung einmünden sowie im unbetätigten Zustand des ASR-Steuerventils über zwei weitere Steuernuten des Steuerkolbens mit jeweils einem Anschlusskanal der von den Bremsventilen ausgehenden Rücklaufleitungen verbunden sind.

Aufgrund der ventilinternen Verzweigung der Anschlüsse der Hauptdruckleitung und der Sammelleitung sowie deren Schaltverbindung mit den Bypass- und Rücklaufleitungen über jeweils eine Steuernut des Steuerkolbens sind die zu schaltenden Volumenströme und die dafür erforderlichen Schaltkräfte relativ gering. Somit ist zum Umschalten des ASR-Steuerventils durch die Bestromung des Elektromagneten ein relativ niedriger Steuerstrom erforderlich. Ebenso weist das ASR-Steuerventil dadurch eine hohe Schaltdynamik, also kurze Reaktionszeiten beim Ein- und Ausschalten des Steuerstroms auf.

Zur weiteren Erhöhung der Schaltdynamik des ASR-Steuerventils ist der Steuerkolben axial und radial druckentlastet, wodurch geringere Schaltkräfte erforderlich sind und ein Verklemmen des Steuerkolbens vermieden wird.

Zur axialen Druckentlastung des Steuerkolbens weist das ASR-Steuerventil vorteilhaft zwei Belüftungskanäle auf, die innerhalb des Ventilgehäuses von beiden stirnseitigen Enden der Ventilbohrung zu jeweils einem der Schaltkanäle der Sammelleitung führen. Leckagebedingt in die stirnseitigen Enden der Ventilbohrung gelangendes Druckmittel wird somit bei einer Axialverschiebung des Steuerkolbens relativ widerstandsarm in die Belüftungskanäle gedrückt und strömt von dort über den Anschluss der Sammelleitung zurück in den Vorratsbehälter.

Zu seiner radialen Druckentlastung ist der Steuerkolben vorteilhaft mit ringförmigen Entlastungsnuten versehen, die an Axialpositionen des Steuerkolbens angeordnet sind, an denen im unbetätigten oder betätigten Zustand des ASR-Steuerventils jeweils ein Anschluss- oder Schaltkanal außerhalb der Steuernuten des Steuerkolbens in die Ventilbohrung einmündet. Der an der Einmündung des jeweiligen Anschluss- oder Schaltkanals in die Ventilbohrung anliegende Druck wird durch die jeweilige Entlastungsnut umfangsseitig verteilt, so dass eine auf den Steuerkolben wirksame radiale Querkraft sowie eine dadurch bedingte erhöhte Reibung zwischen dem Steuerkolben und der Innenwand der Ventilbohrung vermieden werden.

Zur Reduzierung des Fertigungs- und Montageaufwands sind die Einlassventile und die Auslassventile der ABS-Steuerung bevorzugt als weitgehend baugleiche 2/2-Wege-Magnetschaltventile ausgeführt sowie jeweils für jeden Radbremszylinder achsparallel und zusammen mit dem jeweiligen Rückschlagventil in einem Ventilblock mit einem gemeinsamen Ventilgehäuse angeordnet.

Alternativ zu den sonst üblichen Sitzventilen sind die Einlassventile und die Auslassventile zur Erhöhung der Schaltdynamik gemäß einer Weiterbildung der Erfindung jeweils als ein Schieberventil mit einem in einer Ventilbohrung des Ventilgehäuses axialbeweglich geführten Steuerkolben mit einer einzigen Steuernut ausgebildet, deren Anschluss des unmittelbar zu dem Radbremszylinder führenden ausgangsseitigen Abschnitts der Radbremsleitung innerhalb des Ventilgehäuses jeweils in zwei Schaltkanäle verzweigt ist, welche in zwei voneinander beabstandeten Axialpositionen radial in die Ventilbohrung des Einlassventils oder des Auslassventils einmünden, und von denen der eine Schaltkanal im unbetätigten Zustand des Einlassventils über die zugeordnete Steuernut mit einem Anschlusskanal des von der Hauptbremsleitung abzweigenden eingangsseitigen Abschnitts der Radbremsleitung und der andere Schaltkanal im betätigten Zustand des Auslassventils über die zugeordnete Steuernut mit einem Anschlusskanal einer in den Vorratsbehälter führenden Rücklaufleitung verbunden ist.

Um auch bei den Einlass- und Auslassventilen eine hohe Schaltdynamik für die ABS-Steuerung und die ASR-Steuerung zu erzielen, sind auch diese Schaltventile axial und radial druckentlastet ausgebildet.

Zur axialen Druckentlastung des betreffenden Steuerkolbens weisen das Einlassventil und das Auslassventil gemäß einer vorteilhaften Weiterbildung jeweils zwei Belüftungskanäle auf, die innerhalb des Ventilgehäuses von beiden stirnseitigen Enden der jeweiligen Ventilbohrung zu dem Anschlusskanal der Rücklaufleitung führen. leckagebedingt in die stirnseitigen Enden der Ventilbohrungen gelangendes Druckmittel wird somit bei einer Axialverschiebung des jeweiligen Steuerkolbens relativ widerstandsarm in die erwähnten Belüftungskanäle gedrückt und strömt von dort über den Anschluss der Rücklaufleitung zurück in den Vorratsbehälter.

Zu ihrer radialen Druckentlastung sind die Steuerkolben des Einlassventils und des Auslassventils vorteilhaft jeweils mit einer Entlastungsnut versehen, die jeweils an einer Axialposition angeordnet sind, an der im betätigten Zustand des Einlassventils und im unbetätigten Zustand des Auslassventils jeweils ein Anschluss- oder Schaltkanal außerhalb der Steuernut des betreffenden Steuerkolbens in die zugeordnete Ventilbohrung einmündet. Der an der Einmündung des Anschluss- oder Schaltkanals in die jeweilige Ventilbohrung geführte Druck wird durch die Entlastungsnut jeweils umfangsseitig verteilt, so dass eine auf den betreffenden Steuerkolben wirksame radiale Querkraft und eine dadurch bedingte erhöhte Reibung zwischen dem jeweiligen Steuerkolben sowie der Innenwand der betreffenden Ventilbohrung vermieden werden.

Das Rückschlagventil, über das ein gegenüber der zugeordneten Hauptbremsleitung erhöhter Druck in dem betreffenden Radbremszylinder abgebaut werden kann, weist gemäß einer Ausführungsform jeweils eine von einer Ventilfeder gegen einen Ventilsitz gedrückte Kugel auf und ist in einer Ventilbohrung des Ventilgehäuses angeordnet, welche innerhalb des Ventilgehäuses endseitig mit dem Anschluss des ausgangsseitigen Abschnitts der Radbremsleitung und außerhalb des Ventilsitzes, also im Bereich der Ventilfeder, mit dem Anschluss des eingangsseitigen Abschnitts der Radbremsleitung in Verbindung steht.

Zur weiteren Verbesserung der ABS- und ASR-Steuerung werden vorteilhaft die in den Radbremszylindern herrschenden Drücke sensorisch erfasst, was gemäß einer Ausführungsform dadurch realisiert ist, dass an jedem ausgangsseitigen Abschnitt einer Radbremsleitung jeweils ein Drucksensor angeschlossen ist, der über eine Signalleitung mit einem Steuergerät der ABS- und ASR-Steuerung in Verbindung steht.

Zur weiteren Verdeutlichung der Erfindung ist der Beschreibung eine Zeichnung mit einem Ausführungsbeispiel beigefügt. In dieser zeigt
Fig. 1 eine erfindungsgemäße hydraulische Bremsanlage in einer schematischen Übersichtsdarstellung,
Fig. 2 ein erfindungsgemäßes ASR-Steuerventil der hydraulischen Bremsanlage gemäß Fig. 1 in einem ersten Längsschnitt,
Fig. 3 das ASR-Steuerventil gemäß Fig. 2 in einem zweiten Längsschnitt,
Fig. 4 einen ein Einlassventil, ein Auslassventil und ein Rückschlagventil umfassenden Ventilblock der hydraulischen Bremsanlage gemäß Fig. 1 in einem ersten Längsschnitt,
Fig. 5 das Einlassventil des Ventilblocks gemäß Fig. 4 in einem zweiten Längsschnitt,
Fig. 6 das Auslassventil des Ventilblocks gemäß Fig. 4 in einem dritten Längsschnitt,
Fig. 7 das Rückschlagventil des Ventilblocks gemäß Fig. 4 in einem vierten Längsschnitt, und
Fig. 8 eine als bekannt angesehene hydraulische Bremsanlage in einer schematischen Übersichtsdarstellung.

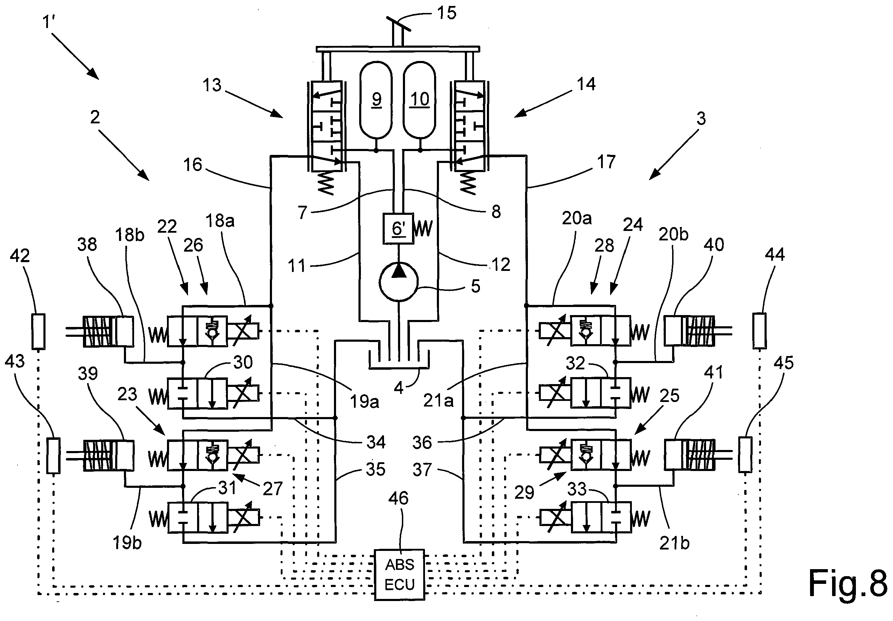

In Fig. 8 ist eine im Prinzip bekannte fremdkraftgestützte hydraulische Bremsanlage 1' mit zwei Bremskreisen 2, 3 eines Radfahrzeugs mit zwei Fahrzeugachsen in einer schematischen Übersicht abgebildet.

Jeder der beiden Bremskreise 2, 3 weist eine Hauptbremsleitung 16, 17 auf, an die jeweils zwei Radbremszylinder 38, 39; 40, 41 nicht näher dargestellter Radbremsen von Fahrzeugrädern der beiden Fahrzeugachsen angeschlossen sind. Bezüglich ihrer Anordnung an den Fahrzeugachsen können die Radbremszylinder 38, 39; 40, 41 achsweise, seitenweise oder diagonal auf die Bremskreise 2, 3 verteilt sein. Über jeweils ein mechanisch betätigbares, als ein 3/3-Wege-Regelventil ausgebildetes Bremsventil 13, 14 sind die Hauptbremsleitungen 16, 17 der beiden Bremskreise 2, 3 jeweils mit einer druckführenden Vorlaufleitung 7, 8 oder einer drucklosen Rücklaufleitung 11, 12 verbindbar. Die beiden Bremsventile 13, 14 sind mechanisch gekoppelt und mittels eines gemeinsamen Bremspedals 15 betätigbar.

Die Vorlaufleitungen 7, 8 sind an ein gemeinsames Abschaltventil 6' angeschlossen, in dem der Druck eines von einer Pumpe 5 aus einem Vorratsbehälter 4 geförderten Druckmittels begrenzt und überschüssiges Druckmittel in nicht dargestellter Weise über Sekundärverbraucher oder unmittelbar in den Vorratsbehälter 4 zurückgeführt wird.

An jede Vorlaufleitung 7, 8 ist jeweils ein Druckspeicher 9, 10 angeschlossen. Die Rücklaufleitungen 11, 12 führen unmittelbar zurück in den Vorratsbehälter 4. Abhängig von der Stellung des Bremspedals 15 wird somit über die Bremsventile 13, 14 ein mehr oder weniger hoher Druck in die Hauptbremsleitungen 16, 17 eingespeist. Bei losgelassenem Bremspedal 15 und somit in ihrer Ruhestellung befindlichen Bremsventilen 13, 14 stehen die Hauptbremsleitungen 16, 17 mit den zugeordneten Rücklaufleitungen 11, 12 in Verbindung und sind dann drucklos geschaltet.

Die beiden Hauptbremsleitungen 16, 17 sind jeweils in zwei Radbremsleitungen 18, 19; 20, 21 verzweigt, die jeweils zu einem der Radbremszylinder 38, 39; 40, 41 des jeweiligen Bremskreises 2, 3 führen. Jede Radbremsleitung 18, 19; 20, 21 weist zwei Abschnitte auf, welche mit den Bezugsziffern 18a, 18b; 19a, 19b; 20a, 20b; 21a, 21b gekennzeichnet sind. Zwischen den jeweils zwei Abschnitten 18a, 18b; 19a, 19b; 20a, 20b; 21a, 21b der Radbremsleitungen 18, 19; 20, 21 ist jeweils ein als ein 2/2-Wege-Magnetschaltventil ausgebildetes Einlassventil 22, 23; 24, 25 angeordnet, welche im unbetätigten, also stromlosen Zustand geöffnet sind. Den Einlassventilen 22, 23; 24, 25 ist jeweils ein in Richtung zu der jeweiligen Hauptbremsleitung 16, 17 öffnendes Rückschlagventil 26, 27; 28, 29 parallel geschaltet angeordnet.

An dem unmittelbar zu dem jeweiligen Radbremszylinder 38, 39; 40, 41 führenden ausgangsseitigen Abschnitt der Radbremsleitung 18b, 19b; 20b, 21b ist jeweils ein als ein 2/2-Wege-Magnetschaltventil ausgebildetes Auslassventil 30, 31; 32, 33 angeschlossen, von denen jeweils eine Rücklaufleitung 34, 35; 36, 37 in den Vorratsbehälter 4 führt, und die im unbetätigten, also im stromlosen Zustand geschlossen sind.

Die mit den parallel geschalteten Rückschlagventilen 26, 27; 28, 29 versehenen Einlassventile 22, 23; 24, 25 und die Auslassventile 30, 31; 32, 33 sind ebenso wie an den Fahrzeugrädern der beiden Fahrzeugachsen angeordnete Drehzahlsensoren 42, 42; 44, 45 Bestandteil einer ABS-Steuerung, welche über elektrische Steuer- und Sensorleitungen, die in Fig. 8 als strichpunktierte Linien dargestellt sind, mit einem ABS-Steuergerät 46 verbunden sind.

Wird während eines Bremsvorgangs durch Vergleich der mittels den Drehzahlsensoren 42, 43; 44, 45 erfassten Raddrehzahlen ein blockiertes oder vor dem Blockieren befindliches Fahrzeugrad erkannt, so wird der in dem betreffenden Radbremszylinder 38, 39; 40, 41 herrschende Druck durch das Schließen des zugeordneten Einlassventils 22, 23; 24, 25 und das Öffnen des zugeordneten Auslassventils 30, 31; 32, 33 zunächst abgesenkt sowie anschließend der Druck durch wechselweises Abschalten und Betätigen der Ein- und Auslassventile moduliert. Wenn sich dann durch ein Zurücknehmen des Bremspedals 15 in den Hauptbremsleitungen 16, 17 ein niedrigerer Druck einstellt, und bei geschlossenen Ein- und Auslassventilen in einem der Radbremszylinder 38, 39; 40, 41 ein höherer Druck als in der zugeordneten Hauptbremsleitung 16, 17 vorliegt, wird dieser Bremsdruck über das jeweils betreffende Rückschlagventil 26, 27; 28, 29 abgebaut.

In der schematischen Übersichtsdarstellung der Fig. 1 ist ein Schaltschema einer hydraulischen Bremsanlage 1 eines allradgetriebenen Radfahrzeugs abgebildet, die auf der hydraulischen Bremsanlage 1' gemäß Fig. 8 basiert und um eine Ventilanordnung einer ASR-Steuerung, also eine Antriebsschlupfregelungsvorrichtung, erweitert ist.

Die Ventilanordnung der ASR-Steuerung umfasst ein einziges, als ein 6/2-Wege-Magnetschaltventil ausgebildetes ASR-Steuerventil 48, über welches im unbetätigten Zustand eine druckführende Hauptdruckleitung 47 gegen zwei jeweils unmittelbar zu einer der Hauptbremsleitungen 16, 17 führenden Bypassleitungen 49, 50 abgesperrt und die von den beiden Bremsventilen 13, 14 ausgehenden Rücklaufleitungen 11, 12 mit einer drucklosen Sammelleitung 51 verbunden sind, und über welches im betätigten Zustand die Hauptdruckleitung 47 mit den beiden Bypassleitungen 49, 50 verbunden sowie die beiden Rücklaufleitungen 11, 12 gegen die Sammelleitung 51 abgesperrt sind.

Die Hauptdruckleitung 47 ist nun an das Abschaltventil 6 angeschlossen, und die Vorlaufleitungen 7, 8 zweigen von dieser Hauptdruckleitung 47 ab. Die Einlass- und Auslassventile 22, 23, 24, 25; 30, 31, 32, 33 sowie die Rückschlagventile 26, 27, 28, 29 sind vorliegend für jeden Radbremszylinder 38, 39, 40, 41 in einem baugleichen Ventilblock 52, 53, 54, 55 zusammengefasst.

Zur genauen Erfassung der in den Radbremszylindern 38, 39, 40, 41 herrschenden Drücke ist an jeden der ausgangsseitigen Abschnitte der Radbremsleitungen 18b, 19b, 20b, 21b jeweils ein Drucksensor 56, 57, 58, 59 angeschlossen. Das ASR-Steuerventil 48 und die Drucksensoren 56, 57, 58, 59 sowie auch die Einlass- und Auslassventile 22, 23, 24, 25; 30, 31, 32, 33 und die Drehzahlsensoren 42, 43, 44, 45 sind über elektrische Steuer- und Sensorleitungen, die in Fig. 1 als strichpunktierte Linien dargestellt sind, mit einem gemeinsamen ABS- und ASR-Steuergerät 60 verbunden.

Bei unbetätigtem ASR-Steuerventil 48 ist die Funktion der hydraulischen Bremsanlage 1 identisch zu der hydraulischen Bremsanlage 1' gemäß Fig. 8. Wird während eines Anfahrvorgangs oder einer Beschleunigung des Radfahrzeugs einem der Drehzahlsensoren 42, 43, 44, 45 das Durchdrehen eines Antriebsrades festgestellt, so werden zur Aktivierung der Antriebsschlupfregelung zunächst beispielsweise die Einlassventile 23, 24, 25 der nicht durchdrehenden Antriebsräder geschlossen und danach das ASR-Steuerventil 48 betätigt, also umgeschaltet. Durch die Betätigung des ASR-Steuerventils 48 werden die Bypassleitungen 49, 50 zur Einspeisung des Druckmittels in die Hauptdruckleitungen 16, 17 mit der Hauptdruckleitung 47 verbunden sowie die Rücklaufleitungen 11, 12 zur Verhinderung eines Abflusses des Druckmittels über die Bremsventile 13, 14 gegen die Sammelleitung 51 abgesperrt. Somit wird das durchdrehende Antriebsrad durch die Betätigung des zugeordneten Radbremszylinders, hier beispielsweise Radbremszylinder 38, abgebremst. Das durch die betreffende Radbremse aufgenommene Bremsmoment wird über das Achsdifferenzial an dem gegenüberliegenden Antriebsrad derselben Antriebsachse als Antriebsmoment wirksam, so dass das Radfahrzeug anfahren beziehungsweise weiter beschleunigen kann.

Sofern mittels den Drehzahlsensoren 42, 43, 44, 45 eine gewisse Beschleunigung des Radfahrzeugs und weitgehend gleiche Raddrehzahlen festgestellt werden, wird der Bremsdruck in dem betreffenden Radbremszylinder 38 durch die Betätigung der zugeordneten Einlass- und Auslassventile 22, 30 wieder abgelassen. Spätestens bei Betätigung der Bremsventile 13, 14 über das Bremspedal 15 wird die Antriebsschlupfregelung beendet, indem das ASR-Steuerventil 48 und die Einlass- und Auslassventile 22, 23, 24, 25; 30, 31, 32, 33 stromlos geschaltet werden und dadurch in ihre Ruhestellung zurückkehren. Bei einem gegebenenfalls in geschlossenem Zustand klemmenden Einlassventil, zum Beispiel Einlassventil 22, wird der in dem betreffenden Radbremszylinder 38 eingeschlossene Bremsdruck dann über das zugeordnete Rückschlagventil 26 abgebaut.

Nachfolgend wird der Aufbau einer bevorzugten Ausführungsform des ASR-Steuerventils 48 anhand der in den Figuren 2 und 3 abgebildeten Längsschnitte erläutert.

Das ASR-Steuerventil 48 ist als ein Schieberventil mit einem in einer Ventilbohrung 62 eines Ventilgehäuses 61 axialbeweglich geführten Steuerkolben 63 ausgebildet, an dem vier ringförmige Steuernuten 64, 65, 66, 67 vorhanden sind. Der Steuerkolben 63 ist mittels eines Magnetankers 70 eines Elektromagneten 68, dessen Magnetspule 69 über ein Kabel 71 mit den Kontakten einer Steckerbuchse 72 verbunden ist, gegen die Rückstellkraft einer axial gegenüberliegend angeordneten Ventilfeder 73 axial verschiebbar.

Der in der Schnittebene von Fig. 2 liegende Anschluss 74 der Hauptdruckleitung 47 ist innerhalb des Ventilgehäuses 61 in zwei Schaltkanäle 76, 77 verzweigt, welche in zwei voneinander beabstandeten Axialpositionen radial in die Ventilbohrung 62 einmünden und im betätigten Zustand des ASR-Steuerventils 48 über zwei Steuernuten 64, 65 des Steuerkolbens 63 mit jeweils einem Anschlusskanal 79, 82 der Bypassleitungen 49, 50 verbunden sind. Während der erste Schaltkanal 76 über einen Verbindungskanal 75 mit dem Anschluss 74 der Hauptdruckleitung 47 in Verbindung steht, schließt der zweite Schaltkanal 77 als koaxiale Verlängerung unmittelbar an diesen Anschluss 74 an.

Der in der Schnittebene von Fig. 2 liegende Anschluss 78 der ersten Bypassleitung 49 geht unmittelbar in den koaxial angeordneten Anschlusskanal 79 über, wogegen der Anschluss 80 der zweiten Bypassleitung 50, der parallel zu der Schnittebene von Fig. 3 angeordnet und daher in Fig. 3 nur gestrichelt eingezeichnet ist, über einen koaxialen Verbindungskanal 81 mit dem in der Schnittebene gemäß Fig. 2 liegenden Anschlusskanal 82 in Verbindung steht.

Der in der Schnittebene von Fig. 3 liegende Anschluss 83 der Sammelleitung 51 ist innerhalb des Ventilgehäuses 61 in zwei Schaltkanäle 85, 86 verzweigt, die in zwei weiteren voneinander beabstandeten Axialpositionen radial in die Ventilbohrung 62 einmünden sowie im unbetätigten Zustand des ASR-Steuerventils 48 über zwei weitere Steuernuten 66, 67 des Steuerkolbens 63 mit jeweils einem Anschlusskanal 88, 90 der von den Bremsventilen 13, 14 ausgehenden Rücklaufleitungen 11, 12 verbunden sind. Während der erste Schaltkanal 85 über einen Verbindungskanal 84 mit dem Anschluss 83 der Sammelleitung 51 in Verbindung steht, schließt der zweite Schaltkanal 86 als koaxiale Verlängerung unmittelbar an diesen Anschluss 83 an. Die in der Schnittebene von Fig. 2 liegenden Anschlüsse 87, 89 der beiden Rücklaufleitungen 11, 12 gehen jeweils unmittelbar in einen koaxialen Anschlusskanal 88, 90 über.

Zur axialen Druckentlastung des Steuerkolbens 63 weist das ASR-Steuerventil 48 zwei Belüftungskanäle 91, 92 auf, die in der Schnittebene von Fig. 3 innerhalb des Ventilgehäuses 61 von beiden stirnseitigen Enden der Ventilbohrung 62 zu jeweils einem der Schaltkanäle 85, 86 der Sammelleitung 51 führen. leckagebedingt in die stirnseitigen Enden der Ventilbohrung 62 gelangendes Druckmittel wird somit bei einer Axialverschiebung des Steuerkolbens 63 relativ widerstandsarm in die Belüftungskanäle 91, 92 gedrückt und strömt von dort über den Anschluss 83 der Sammelleitung 51 zurück in den Vorratsbehälter 4.

Zu seiner radialen Druckentlastung ist der Steuerkolben 63 mit ringförmigen Entlastungsnuten 93, 94, 95, 96 versehen, die an Axialpositionen angeordnet sind, an denen im unbetätigten oder betätigten Zustand des ASR-Steuerventils 48 jeweils ein Anschluss- oder Schaltkanal 76, 77, 85, 90 außerhalb der Steuernuten 64, 65, 66, 67 des Steuerkolbens 63 in die Ventilbohrung 62 einmündet. Der an der Einmündung des jeweiligen Anschluss- oder Schaltkanals 76, 77, 85, 90 in die Ventilbohrung 62 anliegende Druck wird durch die jeweilige Entlastungsnut 93, 94, 95, 96 umfangsseitig verteilt, so dass eine auf den Steuerkolben 63 wirksame radiale Querkraft und eine dadurch bedingte erhöhte Reibung zwischen dem Steuerkolben 63 und der Innenwand der Ventilbohrung 62 vermieden werden.

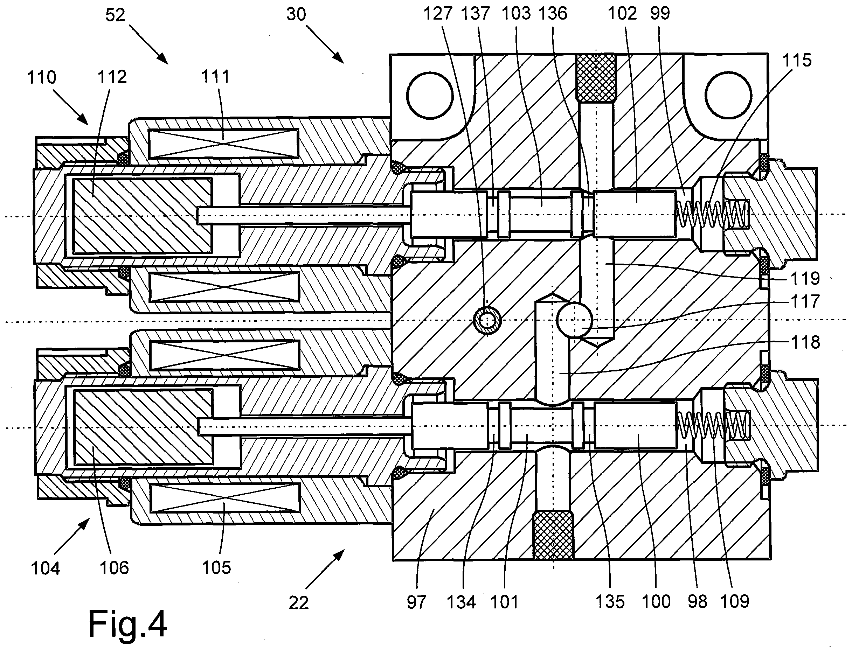

Nachfolgend wird eine bevorzugte Ausführungsform der baugleichen Ventilblöcke 52, 53, 54, 55 am Beispiel des dem Radbremszylinder 38 zugeordneten Ventilblocks 52 anhand der in den Figuren 4 bis 7 abgebildeten Längsschnitte erläutert.

Das Einlassventil 22 und das Auslassventil 30 sind als weitgehend baugleiche 2/2-Wege-Magnetschaltventile ausgebildet, die jeweils als ein Schieberventil mit einem in einer Ventilbohrung 98, 99 eines gemeinsamen Ventilgehäuses 97 axialbeweglich geführten Steuerkolben 100, 102 mit einer einzigen Steuernut 101, 103 ausgeführt und achsparallel in dem Ventilgehäuse 97 angeordnet sind. Die Steuerkolben 100, 101 des Einlassventils 22 und des Auslassventils 30 sind über jeweils eine Koppelstange mit dem Magnetanker 106, 112 eines jeweils zugeordneten Elektromagneten 104, 110 verbunden. Am ankerfernen axialen Ende der Steuerkolben 100, 102 wirkt auf diese jeweils die Rückstellkraft einer zugeordneten Ventilfeder 109, 115. Die Magnetspule 105, 111 der beiden Elektromagneten 104, 110 ist über jeweils ein Kabel 107, 113 mit den Kontakten einer Steckerbuchse 108, 114 verbunden.

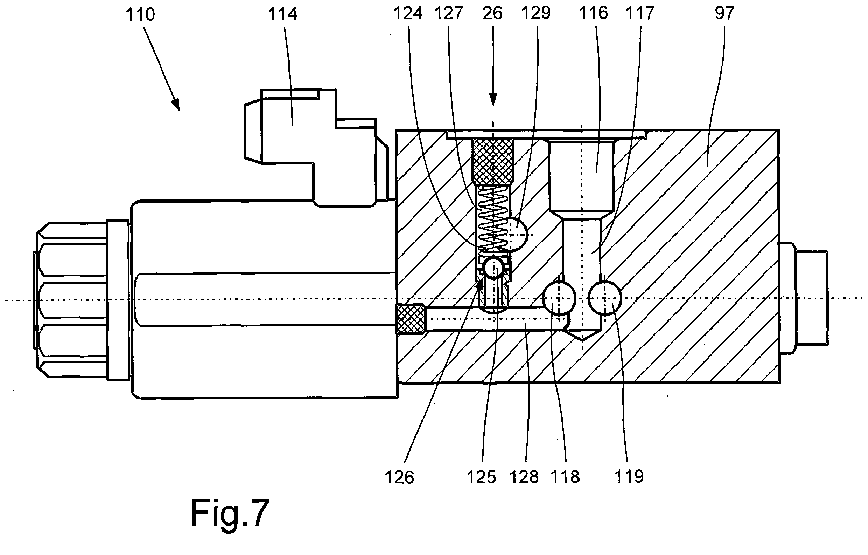

Der Anschluss 116 des ausgangsseitigen Abschnitts 18b der Radbremsleitung 18 ist innerhalb des Ventilgehäuses 97 in zwei Schaltkanäle 118, 119 verzweigt, die in zwei voneinander beabstandeten Axialpositionen radial in die Ventilbohrung 98, 99 des Einlassventils 22 oder des Auslassventils 30 einmünden. Die in der Schnittebene von Fig. 4 liegenden Schaltkanäle 118, 119 stehen über einen Anschlusskanal 117 mit dem Anschluss 116 des ausgangsseitigen Abschnitts 18b der Radbremsleitung 18 in Verbindung, der zusammen mit dem koaxial zu diesem angeordneten Anschlusskanal 117 in der Schnittebene von Fig. 7 liegt.

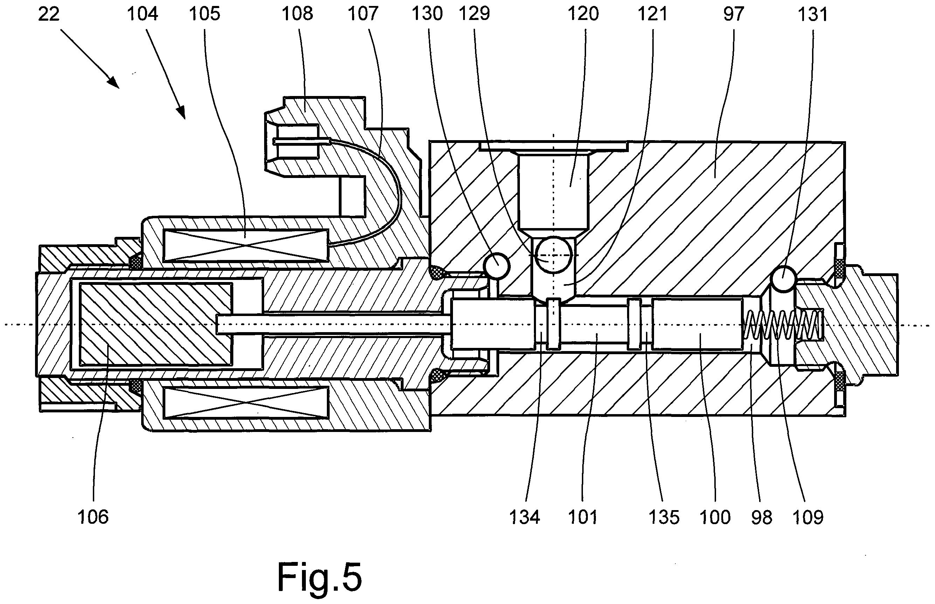

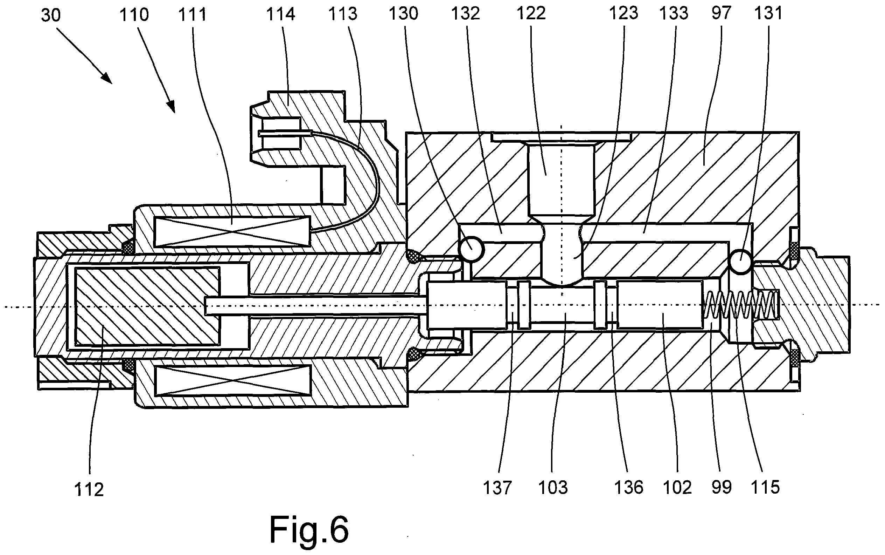

Der eine Schaltkanal 118 ist im unbetätigten Zustand des Einlassventils 22 über die zugeordnete Steuernut 102 mit einem Anschlusskanal 121 des von der Hauptbremsleitung 16 abzweigenden eingangsseitigen Abschnitts 18a der Radbremsleitung 18 verbunden, der in koaxialer Verlängerung des betreffenden Anschlusses 120 in der Schnittebene von Fig. 5 liegt. Der andere Schaltkanal 119 ist im betätigten Zustand des Auslassventils 30 über die zugeordnete Steuernut 103 mit einem Anschlusskanal 123 der in den Vorratsbehälter 4 führenden Rücklaufleitung 34 verbunden, der in koaxialer Verlängerung des betreffenden Anschlusses 122 in der Schnittebene von Fig. 6 liegt.

Das Rückschlagventil 26 weist eine von einer Ventilfeder 124 gegen einen Ventilsitz 126 gedrückte Kugel 125 auf und ist in einer in der Schnittebene von Fig. 7 liegenden Ventilbohrung 127 des Ventilgehäuses 97 angeordnet. Diese Ventilbohrung 127 mündet endseitig in einen achsparallel zu den Ventilbohrungen 98, 99 des Einlassventils 22 und des Auslassventils 30 innerhalb des Ventilgehäuses 97 angeordneten, über den Anschlusskanal 117 mit dem Anschluss 116 des ausgangsseitigen Abschnitts 18b der Radbremsleitung 18 in Verbindung stehenden Verbindungskanal 128. Im Bereich der Ventilfeder 124 außerhalb des Ventilsitzes 126 steht die Ventilbohrung 127 des Rückschlagventils 26 über einen weiteren Verbindungskanal 129 und den betreffenden Anschlusskanal 121 mit dem Anschluss 120 des eingangsseitigen Abschnitts 18a der Radbremsleitung 18 in Verbindung. Somit sorgt das Rückschlagventil 26, wie vorgesehen, für einen Druckabbau in dem Radbremszylinder 38, wenn der dort herrschende Druck höher als der in der Hauptbremsleitung 16 vorliegende Druck ist.

Analog zu dem ASR-Steuerventil 48 weisen das Einlassventil 22 und das Auslassventil 30 jeweils zwei Belüftungskanäle 130, 131; 132, 133 auf, die innerhalb des Ventilgehäuses 97 von beiden stirnseitigen Enden der jeweiligen Ventilbohrung 98, 99 zu dem Anschlusskanal 123 der Rücklaufleitung 34 führen. Hierzu münden die nahe der Schnittebene von Fig. 5 abzweigenden Belüftungskanäle 130, 131 des Einlassventils 22 jeweils in einen der in der Zeichenebene von Fig. 6 liegenden Belüftungskanäle 132, 133 des Auslassventils 30 ein, die ihrerseits zu dem Anschlusskanal 123 der Rücklaufleitung 34 führen.

Ebenso sind die Steuerkolben 100, 102 des Einlassventils 22 und des Auslassventils 30 zu ihrer radialen Druckentlastung jeweils mit einer ringförmigen Entlastungsnut 134, 136 versehen, die jeweils an einer Axialposition angeordnet sind, an der im betätigten Zustand des Einlassventils 22 der Anschlusskanal 121 des eingangsseitigen Abschnitts 18a der Radbremsleitung 18 und im unbetätigten Zustand des Auslassventils 30 der Schaltkanal 119 des ausgangsseitigen Abschnitts 18b der Radbremsleitung 18 außerhalb der Steuernut 101, 103 des betreffenden Steuerkolbens 100, 102 in die zugeordnete Ventilbohrung 98, 99 einmündet. Die an den Steuerkolben 100, 102 des Einlassventils 22 und des Auslassventils 30 vorhandenen zweiten . Ringnuten 135, 137 sind auf die weitgehend baugleiche Ausführung der Ventile 22, 30 zurückzuführen und haben vorliegend keine besondere Funktion.

### Bezugszeichen

- 1, 1': Bremsanlage
- 2: Erster Bremskreis
- 3: Zweiter Bremskreis
- 4: Vorratsbehälter
- 5: Pumpe
- 6, 6': Abschaltventil
- 7: Vorlaufleitung
- 8: Vorlaufleitung
- 9: Erster Druckspeicher
- 10: Zweiter Druckspeicher
- 11: Erste Rücklaufleitung
- 12: Zweite Rücklaufleitung
- 13: Bremsventil
- 14: Bremsventil
- 15: Bremspedal
- 16: Erste Hauptbremsleitung
- 17: Zweite Hauptbremsleitung
- 18: Radbremsleitung
- 18a: Eingangsseitiger Abschnitt von Radbremsleitung 18
- 18b: Ausgangsseitiger Abschnitt von Radbremsleitung 18
- 19: Radbremsleitung
- 19a: Eingangsseitiger Abschnitt von Radbremsleitung 19
- 19b: Ausgangsseitiger Abschnitt von Radbremsleitung 19
- 20: Radbremsleitung
- 20a: Eingangsseitiger Abschnitt von Radbremsleitung 20
- 20b: Ausgangsseitiger Abschnitt von Radbremsleitung 20
- 21: Radbremsleitung
- 21a: Eingangsseitiger Abschnitt von Radbremsleitung 21
- 21b: Ausgangsseitiger Abschnitt von Radbremsleitung 21
- 22: Einlassventil
- 23: Einlassventil
- 24: Einlassventil
- 25: Einlassventil
- 26: Rückschlagventil
- 27: Rückschlagventil
- 28: Rückschlagventil
- 29: Rückschlagventil
- 30: Auslassventil
- 31: Auslassventil
- 32: Auslassventil
- 33: Auslassventil
- 34: Rücklaufleitung
- 35: Rücklaufleitung
- 36: Rücklaufleitung
- 37: Rücklaufleitung
- 38: Radbremszylinder
- 39: Radbremszylinder
- 40: Radbremszylinder
- 41: Radbremszylinder
- 42: Drehzahlsensor
- 43: Drehzahlsensor
- 44: Drehzahlsensor
- 45: Drehzahlsensor
- 46: ABS-Steuergerät
- 47: Hauptdruckleitung
- 48: ASR-Steuerventil
- 49: Bypassleitung
- 50: Bypassleitung
- 51: Sammelleitung
- 52: Ventilblock
- 53: Ventilblock
- 54: Ventilblock
- 55: Ventilblock
- 56: Drucksensor
- 57: Drucksensor
- 58: Drucksensor
- 59: Drucksensor
- 60: Steuergerät der ABS- und ASR-Steuerung
- 61: Ventilgehäuse
- 62: Ventilbohrung
- 63: Steuerkolben
- 64: Steuernut
- 65: Steuernut
- 66: Steuernut
- 67: Steuernut
- 68: Elektromagnet
- 69: Magnetspule
- 70: Magnetanker
- 71: Kabel
- 72: Steckerbuchse
- 73: Ventilfeder
- 74: Anschluss von Hauptdruckleitung 47
- 75: Verbindungskanal
- 76: Schaltkanal
- 77: Schaltkanal
- 78: Anschluss von Bypassleitung 49
- 79: Anschlusskanal
- 80: Anschluss von Bypassleitung 50
- 81: Verbindungskanal
- 82: Anschlusskanal
- 83: Anschluss von Sammelleitung 51
- 84: Verbindungskanal
- 85: Schaltkanal
- 86: Schaltkanal
- 87: Anschluss von Rücklaufleitung 11
- 88: Anschlusskanal
- 89: Anschluss von Rücklaufleitung 12
- 90: Anschlusskanal
- 91: Belüftungskanal
- 92: Belüftungskanal
- 93: Entlastungsnut
- 94: Entlastungsnut
- 95: Entlastungsnut
- 96: Entlastungsnut
- 97: Ventilgehäuse
- 98: Ventilbohrung
- 99: Ventilbohrung
- 100: Steuerkolben
- 101: Steuernut
- 102: Steuerkolben
- 103: Steuernut
- 104: Elektromagnet
- 105: Magnetspule
- 106: Magnetanker
- 107: Kabel
- 108: Steckerbuchse
- 109: Ventilfeder
- 110: Elektromagnet
- 111: Magnetspule
- 112: Magnetanker
- 113: Kabel
- 114: Steckerbuchse
- 115: Ventilfeder
- 116: Anschluss von ausgangsseitigem Abschnitt 18b von Radbremsleitung 18
- 117: Anschlusskanal
- 118: Schaltkanal
- 119: Schaltkanal
- 120: Anschluss von eingangsseitigem Abschnitt 18a von Radbremsleitung 18
- 121: Anschlusskanal
- 122: Anschluss von Rücklaufleitung 34
- 123: Anschlusskanal
- 124: Ventilfeder
- 125: Kugel
- 126: Ventilsitz
- 127: Ventilbohrung
- 128: Verbindungskanal
- 129: Verbindungskanal
- 130: Belüftungskanal
- 131: Belüftungskanal
- 132: Belüftungskanal
- 133: Belüftungskanal
- 134: Entlastungsnut
- 135: Ringnut
- 136: Entlastungsnut
- 137: Ringnut
- ABS: Antiblockiersystem
- ASR: Antriebsschlupfregelung
- ATC: Automatic Traction Control
- ECU: Electronic Control Unit

## Patentansprüche

1. Fremdkraftgestützte hydraulische Bremsanlage (1) eines Radfahrzeugs, mit zwei Bremskreisen (2, 3), die jeweils eine über ein Bremsventil (13, 14) mit einer druckführenden Vorlaufleitung (7, 8) oder mit einer drucklosen Rücklaufleitung (11, 12) verbindbare Hauptbremsleitung (16, 17) sowie mehrere von dieser abzweigende, jeweils zu einem Radbremszylinder (38, 39, 40, 41) einer Radbremse führende Radbremsleitungen (18a, 18b; 19a, 19b, 20a, 20b; 21a, 21b) aufweisen, mit einer Ventilanordnung einer ABS-Steuerung, die an jeder Radbremse ein in der betreffenden Radbremsleitung (18a, 18b; 19a, 19b, 20a, 20b; 21a, 21b) angeordnetes Einlassventil (22, 23 ,24, 25) mit einem parallel geschalteten Rückschlagventil (26, 27, 28, 29) und ein von dem jeweiligen Radbremszylinder (38, 39, 40, 41) in eine Rücklaufleitung (34, 35, 36, 37) führendes Auslassventil (30, 31, 32, 33) aufweist, und mit einer Ventilanordnung einer ASR-Steuerung, mittels der eine Druckleitung unmittelbar mit den Hauptbremsleitungen (16, 17) verbindbar und die Rücklaufleitungen (11, 12) absperrbar sind, **dadurch gekennzeichnet, dass** die Ventilanordnung der ASR-Steuerung ein einziges, als ein 6/2-Wege-Magnetschaltventil ausgebildetes ASR-Steuerventil (48) aufweist, über welches im unbetätigten Zustand eine druckführende Hauptdruckleitung (47) gegen zwei jeweils unmittelbar zu einer der Hauptbremsleitungen (16, 17) führenden Bypassleitungen (49, 50) abgesperrt sowie die beiden Rücklaufleitungen (11, 12) mit einer drucklosen Sammelleitung (51) verbunden sind, und über welches im betätigten Zustand die Hauptdruckleitung (47) mit den beiden Bypassleitungen (49, 50) verbunden sowie die beiden Rücklaufleitungen (11, 12) gegen die Sammelleitung (51) abgesperrt sind.

2. Bremsanlage nach Anspruch 1, **dadurch gekennzeichnet, dass** das ASR-Steuerventil (48) als ein Schieberventil mit einem in einer Ventilbohrung (62) eines Ventilgehäuses (61) axialbeweglich geführten Steuerkolben (63) mit vier Steuernuten (64, 65, 66, 67) ausgebildet ist, dass der Anschluss (74) der Hauptdruckleitung (47) innerhalb des Ventilgehäuses (61) in zwei Schaltkanäle (76, 77) verzweigt ist, welche in zwei voneinander beabstandeten Axialpositionen radial in die Ventilbohrung (62) einmünden sowie im betätigten Zustand des ASR-Steuerventils (48) über zwei Steuernuten (64, 65) des Steuerkolbens (63) mit jeweils einem Anschlusskanal (79, 82) der Bypassleitungen (49, 50) verbunden sind, und dass der Anschluss (83) der Sammelleitung (51) innerhalb des Ventilgehäuses (61) in zwei Schaltkanäle (85, 86) verzweigt ist, welche in zwei weiteren voneinander beabstandeten Axialpositionen radial in die Ventilbohrung (62) einmünden sowie im unbetätigten Zustand des ASR-Steuerventils (48) über zwei weitere Steuernuten (66, 67) des Steuerkolbens (63) mit jeweils einem Anschlusskanal (88, 90) der von den Bremsventilen (13, 14) ausgehenden Rücklaufleitungen (11, 12) verbunden sind.

3. Bremsanlage nach Anspruch 1 oder 2, **dadurch gekennzeichnet, dass** das ASR-Steuerventil (48) zur axialen Druckentlastung des Steuerkolbens (63) zwei Belüftungskanäle (91, 92) aufweist, die innerhalb des Ventilgehäuses (61) von beiden stirnseitigen Enden der Ventilbohrung (62) zu jeweils einem der Schaltkanäle (85, 86) der Sammelleitung (51) führen.

4. Bremsanlage nach einem der Ansprüche 1 bis 3, **dadurch gekennzeichnet, dass** der Steuerkolben (63) zu seiner radialen Druckentlastung mit Entlastungsnuten (93, 94, 95, 96) versehen ist, die an Axialpositionen angeordnet sind, an denen im unbetätigten oder betätigten Zustand des ASR-Steuerventils (48) jeweils ein Anschluss- oder Schaltkanal (76, 77, 85, 90) außerhalb der Steuernuten (64, 65, 66, 67) des Steuerkolbens in die Ventilbohrung (62) einmündet.

5. Bremsanlage nach einem der Ansprüche 1 bis 4, **dadurch gekennzeichnet, dass** die Einlassventile (22, 23, 24, 25) und die Auslassventile (30, 31, 32, 33) der ABS-Steuerung als 2/2-Wege-Magnetschaltventile ausgeführt und jeweils für jeden Radbremszylinder (38, 39, 40, 41) achsparallel sowie zusammen mit dem jeweiligen Rückschlagventil (26, 27, 28, 29) in einem Ventilblock (52, 53, 54, 55) mit einem gemeinsamen Ventilgehäuse (97) angeordnet sind.

6. Bremsanlage nach Anspruch 5, **dadurch gekennzeichnet, dass** die Einlassventile (22, 23, 24, 25) und die Auslassventile (30, 31, 32, 33) jeweils als ein Schieberventil mit einem in einer Ventilbohrung (98, 99) des Ventilgehäuses (97) axialbeweglich geführten Steuerkolben (100, 102) mit einer einzigen Steuernut (101, 103) ausgebildet sind,
und dass der Anschluss (116) des ausgangsseitigen Abschnitts (18b) der Radbremsleitung (18) innerhalb des Ventilgehäuses (97) jeweils in zwei Schaltkanäle (118, 119) verzweigt ist, die in zwei voneinander beabstandeten Axialpositionen radial in die Ventilbohrung (98, 99) des Einlassventils (22) oder des Auslassventils (30) einmünden,
und von denen der eine Schaltkanal (118) im unbetätigten Zustand des Einlassventils (22) über die zugeordnete Steuernut (101) mit einem Anschlusskanal (121) des eingangsseitigen Abschnitts (18a) der Radbremsleitung (18) und der andere Schaltkanal (119) im betätigten Zustand des Auslassventils (30) über die zugeordnete Steuernut (103) mit einem Anschlusskanal (123) einer in den Vorratsbehälter (4) führenden Rücklaufleitung (34) verbunden ist.

7. Bremsanlage nach Anspruch 5 oder 6, **dadurch gekennzeichnet, dass** das Einlassventil (22) und das Auslassventil (30) zur axialen Druckentlastung des betreffenden Steuerkolbens (100, 102) jeweils zwei Belüftungskanäle (130, 131; 132, 133) aufweisen, die innerhalb des Ventilgehäuses (97) von beiden stirnseitigen Enden der jeweiligen Ventilbohrung (101, 103) zu dem Anschlusskanal (123) der Rücklaufleitung (34) führen.

8. Bremsanlage nach einem der Ansprüche 5 bis 7, **dadurch gekennzeichnet, dass** die Steuerkolben (100, 102) des Einlassventils (22) und des Auslassventils (30) zu ihrer radialen Druckentlastung jeweils mit einer Entlastungsnut (134, 136) versehen sind, die jeweils an einer Axialposition angeordnet sind, an der im betätigten Zustand des Einlassventils (22) und im unbetätigten Zustand des Auslassventils (30) jeweils ein Anschluss- oder Schaltkanal (119, 121) außerhalb der Steuernut (101, 103) des betreffenden Steuerkolbens (100, 102) in die zugeordnete Ventilbohrung (98, 99) einmündet.

9. Bremsanlage nach einem der Ansprüche 5 bis 8, **dadurch gekennzeichnet, dass** das Rückschlagventil (26) jeweils eine von einer Ventilfeder (124) gegen einen Ventilsitz (126) gedrückte Kugel (125) aufweist, und dass das Rückschlagventil (26) in einer Ventilbohrung (127) des Ventilgehäuses (97) angeordnet ist, welche innerhalb des Ventilgehäuses (97) endseitig mit dem Anschluss (116) des ausgangsseitigen Abschnitts (18b) der Radbremsleitung (18) und außerhalb des Ventilsitzes (126) mit dem Anschluss (120) des eingangsseitigen Abschnitts (18a) der Radbremsleitung (18) in Verbindung steht.

10. Bremsanlage nach einem der Ansprüche 1 bis 9, **dadurch gekennzeichnet, dass** an jedem ausgangsseitigen Abschnitt (18b, 19b, 20b, 21b) einer Radbremsleitung (18a, 18b; 19a, 19b, 20a, 20b; 21a, 21b) jeweils ein Drucksensor (56, 57, 58, 59) angeschlossen ist, der über eine Signalleitung mit einem Steuergerät (60) der ABS- und ASR-Steuerung in Verbindung steht.

## Claims

1. External force-supported hydraulic braking system (1) of a wheeled vehicle, comprising two brake circuits (2, 3) each having a main brake line (16, 17) that can be connected to a pressure-carrying supply line (7, 8) or to a pressureless return line (11, 12) via a brake valve (13, 14), and having a number of wheel brake lines (18a, 18b; 19a, 19b, 20a, 20b; 21a, 21b) branching from same and each leading to a wheel brake cylinder (38, 39, 40, 41) of a wheel brake, comprising a valve assembly of an ABS system which at each wheel brake has an inlet valve (22, 23, 24, 25), with a check valve (26, 27, 28, 29) connected in parallel, arranged in the corresponding wheel brake line, and an outlet valve (30, 31, 32, 33) leading from the respective wheel brake cylinder into a return line (34, 35, 36, 37), and comprising a valve assembly of a TCS system, by means of which a pressure line can be connected directly to the main brake lines (16, 17) and the return lines (11, 12) can be blocked, **characterized in that** the valve assembly of the TCS system has a single TCS control valve (48) formed as a 6/2-way magnetic switching valve, via which, in the non-actuated state, a pressure-carrying main pressure line (47) is blocked against two bypass lines (49, 50) each leading directly to a respective main brake line (16, 17), and the two return lines (11, 12) are connected to a pressureless collective line (51), and via which, in the actuated state, the main pressure line (47) is connected to the two bypass lines (49, 50) and the two return lines (11, 12) are blocked against the collective line (51).

2. Braking system according to Claim 1, **characterized in that** the TCS control valve (48) is configured as a slide valve with a control piston (63) having four control grooves (64, 65, 66, 67) and guided so as to move axially in a valve bore (62) of a valve casing (61), that the port (74) of the main pressure line (47) branches inside the valve casing (61) into two switching channels (76, 77) which open radially into the valve bore (62) at two mutually spaced axial positions, and in the actuated state of the TCS control valve (48) are each connected via two control grooves (64, 65) of the control piston (63) to a respective joining channel (79, 82) of the bypass lines (49, 50), and that the port (83) of the collective line (51) branches inside the valve casing (61) into two switching channels (85, 86) which open radially into the valve bore (62) at two further mutually spaced axial positions, and in the non-actuated state of the TCS control valve (48) are each connected via two further control grooves (66, 67) of the control piston (63) to a respective joining channel (88, 90) of the return lines (11, 12) departing from the brake valves (13, 14).

3. Braking system according to Claim 1 or 2, **characterized in that** for axial pressure relief of the control piston (63), the TCS control valve (48) has two vent channels (91, 92) which lead inside the valve casing (61) from the two end faces of the valve bore (62) to a respective switching channel (85, 86) of the collective line (51).

4. Braking system according to any of Claims 1 to 3, **characterized in that** for radial pressure relief, the control piston (63) is provided with pressure relief grooves
(93, 94, 95, 96) arranged at axial positions at which, in non-actuated or actuated state of the TCS control valve (48), a respective joining or switching channel (76, 77, 85, 90) opens into the valve bore (62) outside the control grooves (64, 65, 66, 67) of the control piston.

5. Braking system according to any of Claims 1 to 4, **characterized in that** the inlet valves (22, 23, 24, 25) and the outlet valves (30, 31, 32, 33) of the ABS system are configured as 2/2-way magnetic switching valves, and for each wheel brake cylinder (38, 39, 40, 41) are arranged axially parallel and together with the respective check valve (26, 27, 28, 29) in a valve block (52, 53, 54, 55) with a common valve casing (97).

6. Braking system according to Claim 5, **characterized in that** the inlet valves (22, 23, 24, 25) and the outlet valves (30, 31, 32, 33) are each configured as slide valves with a control piston (100, 102) having a single control groove (101, 103) and guided so as to move axially in a valve bore (98, 99) of the valve casing (97),
and that the port (116) of the output-side portion (18b) of the wheel brake line (18) branches inside the valve casing (97) into two switching channels (118, 119) which each open radially into the valve bore (98, 99) of the inlet valve (22) or outlet valve (30) respectively at two mutually spaced axial positions, and of which, in the non-actuated state of the inlet valve (22), the one switching channel (118) is connected via the assigned control groove (101) to a joining channel (121) of the input-side portion (18a) of the wheel brake line (18), and in the actuated state of the outlet valve (30), the other switching channel (119) is connected via the assigned control groove (103) to a joining channel (123) of a return line (34) leading to the storage container (4).

7. Braking system according to Claim 5 or 6, **characterized in that** for axial pressure relief of the respective control piston (100, 102), the inlet valve (22) and the outlet valve (30) each have two vent channels (130, 131; 132, 133) which lead inside the valve casing (97) from the two end faces of the respective valve bore (101, 103) to the joining channel (123) of the return line (34).

8. Braking system according to any of Claims 5 to 7, **characterized in that** for radial pressure relief, the control pistons (100, 102) of the inlet valve (22) and the outlet valve (30) are each fitted with a pressure relief groove (134, 136) arranged at an axial position at which, in the actuated state of the inlet valve (22) and in the non-actuated state of the outlet valve (30), a joining or switching channel (119, 121) respectively opens into the assigned valve bore (98, 99) outside the control groove (101, 103) of the respective control piston (100, 102).

9. Braking system according to any of Claims 5 to 8, **characterized in that** the check valve (26) has a ball (125) pressed by a valve spring (124) against the valve seat (126), and that the check valve (26) is arranged in a valve bore (127) of the valve casing (97) which is connected inside the valve casing (97) on the end side to the port (116) for the output-side portion (18b) of the wheel brake line (18) and outside the valve seat (126) to the port (120) for the input-side portion (18a) of the wheel brake line (18).

10. Braking system according to any of Claims 1 to 9, **characterized in that** at each output-side portion (18b, 19b, 20b, 21b) of a wheel brake line (18a, 18b; 19a, 19b, 20a, 20b; 21a, 21b), a pressure sensor (56, 57, 58, 59) is connected which is connected via a signal line to a control unit (60) of the ABS and TCS system.

## Revendications

1. Système de freinage hydraulique (1), assisté par une force extérieure, d'un véhicule à roues, le système de freinage comprenant deux circuits de freinage (2, 3), qui sont pourvus chacun d'une conduite de frein principale (16, 17) pouvant être raccordée à une conduite montante sous pression (7, 8) ou à une conduite de retour sans pression (11, 12) par le biais d'une vanne de frein (13, 14) et d'une pluralité de conduites de frein de roue (18a, 18b ; 19a, 19b, 20a, 20b ; 21a, 21b) dérivant de la conduite de frein principale et menant chacune à un cylindre de frein de roue (38, 39, 40, 41) d'un frein de roue, un ensemble de vannes d'une commande ABS, qui comporte au niveau de chaque frein de roue une vanne d'entrée (22, 23, 24, 25) disposée dans la conduite de frein de roue respective (18a, 18b ; 19a, 19b, 20a, 20b ; 21a, 21b) et pourvue d'une vanne anti-retour (26, 27, 28, 29) montée en parallèle et une vanne de sortie (30, 31, 32, 33) allant du cylindre de frein de roue respectif (38, 39, 40, 41) jusque dans une conduite de retour (34, 35, 36, 37), et un ensemble de vannes d'une commande ASR au moyen duquel une conduite sous pression peut être raccordée directement aux conduites de frein principales (16, 17) et les conduites de retour (11, 12) peuvent être bloquées, **caractérisé en ce que** l'ensemble de vannes de la commande ASR comporte une vanne de commande ASR unique (48) qui est conçue comme une vanne de commutation magnétique à 6/2 voies et au moyen de laquelle, à l'état non actionné, une conduite de pression principale sous pression (47) est coupée des deux conduites de dérivation (49, 50) menant directement à l'une des conduites de frein principales (16, 17) et les deux conduites de retour (11, 12) sont reliées à une conduite collectrice sans pression (51) et au moyen de laquelle, à l'état actionné, la conduite de pression principale (47) est raccordée aux deux conduites de dérivation (49, 50) et les deux conduites de retour (11, 12) sont coupées de la conduite collectrice (51).

2. Système de freinage selon la revendication 1, **caractérisé en ce que** la vanne de commande ASR (48) est conçue comme une vanne à tiroir comportant un piston de commande (63) guidé de manière mobile axialement dans un alésage de vanne (62) d'un boîtier de vanne (61) et pourvu de quatre gorges de commande (64, 65, 66, 67), **en ce que** le raccord (74) de la conduite de pression principale (47) à l'intérieur du boîtier de vanne (61) est dérivé en deux canaux de commutation (76, 77) qui débouchent, dans deux positions axiales espacées l'une de l'autre, radialement dans l'alésage de vanne (62) et qui sont raccordés, lorsque la vanne de commande ASR (48) est actionnée, chacun à un canal de raccordement (79, 82) des conduites de dérivation (49, 50) par le biais de deux gorges de commande (64, 65) du piston de commande (63), et **en ce que** le raccord (83) de la conduite collectrice (51) à l'intérieur du boîtier de vanne (61) est dérivé en deux canaux de commutation (85, 86) qui débouchent radialement dans l'alésage de vanne (62) dans deux autres positions axiales espacées l'une de l'autre et qui sont raccordes, lorsque la vanne de commande ASR (48) n'est pas actionnée, chacun à un canal de raccordement (88, 90) des conduites de retour (11, 12), partant des vannes de frein (13, 14), par le biais de deux autres gorges de commande (66, 67) du piston de commande (63).

3. Système de freinage selon la revendication 1 ou 2, **caractérisé en ce que** la vanne de commande ASR (48) comporte, pour la décharge de pression axiale du piston de commande (63), deux canaux de ventilation (91, 92) qui vont, à l'intérieur du boîtier de vanne (61), des deux extrémités frontales de l'alésage de vanne (62) respectivement à l'un des canaux de commutation (85, 86) de la conduite collectrice (51).

4. Système de freinage selon l'une des revendications 1 à 3, **caractérisé en ce que** le piston de commande (63) est pourvu, pour sa décompression radiale, de gorges de décompression (93, 94, 95, 96) qui sont disposées à des positions axiales à chacune desquelles, lorsque la vanne de commande ASR (48) est actionnée ou n'est pas actionnée, un canal de raccordement ou de commutation (76, 77, 85, 90) débouche dans l'alésage de vanne (62) à l'extérieur des gorges de commande (64, 65, 66, 67) du piston de commande.

5. Système de freinage selon l'une des revendications 1 à 4, **caractérisé en ce que** les vannes d'entrée (22, 23, 24, 25) et les vannes de sortie (30, 31, 32, 33) de la commande ABS sont réalisées sous la forme de vannes de commutation magnétique à 2/2 voies et sont disposées chacune pour chaque cylindre de frein de roue (38, 39, 40, 41) parallèlement à l'axe et conjointement avec la vanne anti-retour respective (26, 27, 28, 29) dans un bloc de vannes (52, 53, 54, 55) comportant un boîtier de vanne commun (97).

6. Système de freinage selon la revendication 5, **caractérisé en ce que** les vannes d'entrée (22, 23, 24, 25) et les vannes de sortie (30, 31, 32, 33) sont conçues chacune comme une vanne à tiroir comportant un piston de commande (100, 102) guidé de manière mobile axialement dans un alésage de vanne (98, 99) du boîtier de vanne (97) et pourvue d'une seule gorge de commande (101, 103) et **en ce que** le raccord (116) de la partie côté sortie (18b) de la conduite de frein de roue (18) est dérivé, à l'intérieur du boîtier de vanne (97), en deux canaux de commutation (118, 119) qui débouchent radialement, dans deux positions axiales espacées l'une de l'autre, dans l'alésage de vanne (98, 99) de la vanne d'entrée (22) ou de la vanne de sortie (30) et dont un canal de commutation (118) est raccordé, lorsque la vanne d'entrée (22) n'est pas actionnée, à un canal de raccordement (121) de la partie côté entrée (18a) de la conduite de frein de roue (18) par le biais de la gorge de commande associée (101) et dont l'autre canal de commutation (119) est raccordé, lorsque la vanne de sortie (30) est actionnée, à un canal de raccordement (123) d'une conduite de retour (34), menant au réservoir (4), par le biais de la gorge de commande associée (103).

7. Système de freinage selon la revendication 5 ou 6, **caractérisé en ce que** la vanne d'entrée (22) et la vanne de sortie (30) comportent chacune, pour la décompression axiale du piston de commande respectif (100, 102), deux canaux de ventilation (130, 131 ; 132, 133) qui vont, à l'intérieur du boîtier de vanne (97), des deux extrémités frontales de l'alésage de vanne respectif (101, 103) au canal de raccordement (123) de la conduite de retour (34).

8. Système de freinage selon l'une des revendications 5 à 7, **caractérisé en ce que** les pistons de commande (100, 102) de la vanne d'entrée (22) et de la vanne de sortie (30) sont pourvu chacun, pour leur décompression radiale, d'une gorge de décompression (134, 136) qui est disposée dans une position axiale dans laquelle, lorsque la vanne d'entrée (22) est actionnée et que la vanne de sortie (30) n'est pas actionnée, un canal de raccordement ou de commutation (119, 121) débouche dans l'alésage de vanne associé (98, 99) à l'extérieur de la gorge de commande (101, 103) du piston de commande respectif (100, 102).

9. Système de freinage selon l'une des revendications 5 à 8, **caractérisé en ce que** la vanne anti-retour (26) comporte une bille (125) pressée par un ressort de vanne (124) contre un siège de vanne (126) et **en ce que** la vanne anti-retour (26) est disposée dans un alésage de vanne (127) du boîtier de vanne (97), lequel alésage de vanne est raccordé côté extrémité au raccord (116) de la partie côté sortie (18b) de la conduite de frein de roue (18) à l'intérieur du boîtier de vanne (97) et au raccord (120) de la partie côté entrée (18a) de la conduite de frein de roue (18) à l'extérieur du siège de vanne (126) .

10. Système de freinage selon l'une des revendications 1 à 9, **caractérisé en ce qu'**un capteur de pression (56, 57, 58, 59), qui est raccordé à une unité de commande (60) de la commande ABS et ASR par le biais d'une ligne de signal, est raccordé à chaque partie côté sortie (18b, 19b, 20b, 21b) d'une conduite de frein de roue (18a, 18b, 19a, 19b, 20a, 20b, 21a, 21b).
